# EUROPÄISCHE PATENTSCHRIFT

(11) **EP 2 585 355 B1**
(45) Veröffentlichungstag und Bekanntmachung des Hinweises auf die Patenterteilung: **22.04.2015**
(21) Anmeldenummer: 11725326.0
(22) Anmeldetag: 31.05.2011
(51) Int. Cl.: B62D 1/184, B62D 1/19

(54) **VERSTELLBARE LENKSÄULE FÜR EIN KRAFTFAHRZEUG**
ADJUSTABLE STEERING COLUMN FOR A MOTOR VEHICLE
COLONNE DE DIRECTION REGLABLE DESTINEE A UN VEHICULE A MOTEUR

(30) Priorität: 06.08.2010 DE 102010036891; 28.06.2010 DE 102010017622
(43) Veröffentlichungstag der Anmeldung: 01.05.2013
(73) Patentinhaber: ThyssenKrupp Presta Aktiengesellschaft, 9492 Eschen (LI)
(72) Erfinder: SULSER, Hansjörg, FL-9487 Gamprin (LI); SCHNITZER, Rony, FL-9491 Ruggell (LI); SENN, Mathias, CH-9472 Grabs (CH)
(74) Vertreter: Fechner, Thomas
(86) Internationale Anmeldenummer: PCT/EP2011/002676
(87) Internationale Veröffentlichungsnummer: WO 2012/000593

(56) Entgegenhaltungen:
- EP-A2- 2 022 699
- DE-A1-102007 002 091
- DE-B3-102004 051 060
- GB-A- 2 454 345
- US-B2- 7 703 804

## Beschreibung

Die vorliegende Erfindung betrifft eine verstellbare Lenksäule für ein Kraftfahrzeug, wobei die Lenksäule zumindest zwei Bauteile und zumindest eine Feststelleinrichtung aufweist, wobei die Bauteile in einer geöffneten Stellung der Feststelleinrichtung in ihrer Position relativ zueinander entlang eines Verstellweges verstellbar und in einer geschlossenen Stellung der Feststelleinrichtung in ihrer Position relativ zueinander festgehalten sind und zumindest an einem ersten der Bauteile ein, den Verstellweg begrenzendes und bei Überschreitung eines Kraftwertes vom ersten der Bauteile Ioslösbares Anschlagelement angeordnet ist.

Derartige verstellbare Lenksäulen sind beim Stand der Technik bekannt. Die Verstellbarkeit der beiden Bauteile relativ zueinander dient z.B. dazu, die Position des Lenkrades an den jeweiligen Fahrer anpassen zu können. Es sind höhen- und/oder längsverstellbare Lenksäulen beim Stand der Technik bekannt. Sollen die Bauteile der Lenksäule relativ zueinander verstellt werden, so wird die Feststelleinrichtung in ihre geöffnete Stellung gebracht. Ist die gewünschte Einstellung bzw. Position relativ zueinander erreicht, so wird die Feststelleinrichtung in die geschlossene Stellung gebracht, in der die beiden Bauteile der verstellbaren Lenksäule relativ zueinander in ihrer Position festgehalten sind.

Um eine Fehlbedienung auszuschließen und den Verstellweg bei geöffneter Feststelleinrichtung zu begrenzen, ist es bekannt, an einem der beiden Bauteile ein den Verstellweg begrenzendes Anschlagelement vorzusehen. Um im Fall einer Fahrzeugkollision, also im Crashfall diese Begrenzung aufzuheben, ist es bekannt, dieses Anschlagelement bei Überschreitung eines Kraftwertes loslösbar auszugestalten. Beim Stand der Technik wird auch häufig von Losbrechelementen gesprochen.

Eine Lenksäule der genannten Art ist beispielsweise aus der US 7,703,804 B2 bekannt. Diese Schrift offenbart eine verstellbare Lenksäule, bei der der Verstellweg entlang eines Verstellbereichs in Form eines Langlochs geführt ist. Im Falle eines Fahrzeugcrashs wird nach Überschreiten eines vordefinierbaren Kraftwertes ein Anschlagelement, welches vorab an einer Lenksäulenlagereinheit gehalten war, gelöst, sodass die Lenksäule entlang einer erweiterten Bahn verschiebbar ist, die sich an den Verstellweg anschließt. Eine derartige Lösung ist aufwendig, da das Anschlagelement geeignet befestigt werden muss und die Losbrechkraft eingestellt werden muss. Ein weiterer wesentlicher Nachteil besteht darin, dass ein entsprechender Befestigungszapfen abgebrochen werden muss, was zu einer relativ hohen Kraft-spitze zu Beginn des Crashvorgangs führt. Diese Kraftspitze kann im Crashfall negative Auswirkungen auf den Fahrer des Kraftfahrzeugs haben.

Eine andere gattungsgemäße verstellbare Lenksäule ist in der DE 10 2007 002 091 A1 offenbart. Auch hier ist ein Anschlagelement zur Begrenzung des Verstellweges vorgesehen, welches bei Überschreiten eines vordefinierten Kraftwertes in Form eines Losbrechelementes abbricht und den Weg für eine weitere Axialverschiebung der Lenkspindellagereinheit relativ zur karosseriefesten Konsoleneinheit freigibt. Auch hier besteht der Nachteil, dass das Losbrechelement, da es auch im Missbrauchsfall den dort auftretenden Kräften standhalten muss, zu Beginn des Crashs eine relativ hohe Kraftspitze erzeugt, welche unerwünscht ist, da sie zu unnötigen Verletzungen des Fahrers des Kraftfahrzeuges führen kann.

Aufgabe der Erfindung ist es, gattungsgemäße verstellbare Lenksäulen dahingehend zu verbessern, dass die beim Loslösen des Anschlagelementes auftretenden Kraftspitzen vermieden oder zumindest verringert werden.

Diese Aufgabe wird durch eine verstellbare Lenksäule gemäß Patentanspruch 1 gelöst. Die abhängigen Ansprüche beschreiben Merkmale bevorzugter Ausgestaltungsformen der Erfindung.

Es ist somit vorgesehen, dass die verstellbare Lenksäule ein Werkzeug aufweist, welches zum Loslösen des Anschlagelementes zumindest bereichsweise zwischen das Anschlagelement und dem ersten der Bauteile einführbar ist. Ein Grundgedanke dabei ist somit, dass das Anschlagelement nicht mehr wie beim Stand der Technik über einen stumpfen Anschlag abgebrochen werden muss, was zu der ungewünschten Kraftspitze führt, sondern diese Kraft-spitze deutlich gemindert bzw. vermieden wird, indem das Werkzeug zwischen das Anschlagelement und dem ersten Bauteil, an dem das Anschlagelement vorab befestigt ist, eingeführt, vorzugsweise eingeschoben, wird. Dabei kann vorgesehen sein, dass das Werkzeug beim Einführen zwischen das Anschlagelement und das erste der Bauteile das Anschlagelement vom ersten der Bauteile abhebelt und/oder abschert. Weiters ist es günstig, wenn am Werkzeug und/oder in dem Bereich des Anschlagelementes auf den das Werkzeug beim Loslösen des Anschlagelementes auftrifft, eine, vorzugsweise keilförmige, Schrägfläche oder schräge Fläche oder Spitze angeordnet ist. Wie auch bei gattungsgemäßen verstellbaren Lenksäulen ist dabei vorgesehen, dass das Anschlagelement bei Betätigung unterhalb eines vorzugsweise vordefinierbaren Kraftwertes den Verstellweg zwischen den beiden Bauteilen begrenzt und erst bei Erreichen bzw. Überschreiten des vorzugsweise vordefinierbaren Kraftwertes insbesondere im Crashfall ein Loslösen des Anschlagelementes vom ersten der Bauteile erfolgt.

Bevorzugte Ausgestaltungsformen der Erfindung sehen vor, dass das Werkzeug zumindest beim Loslösen des Anschlagelementes vom ersten der Bauteile am anderen der Bauteile abgestützt, vorzugsweise befestigt, ist. Dabei muss das Werkzeug nicht zwingend direkt am anderen der Bauteile abgestützt sein. Es kann auch vorgesehen sein, dass das Werkzeug über ein weiteres Bauteil z.B. ein Zwischenstück zwischen den beiden Bauteilen am anderen Bauteil abgestützt ist. Generell ist es möglich, dass das Werkzeug relativ zum anderen der Bauteile permanent unbewegbar an dem anderen der Bauteile abgestützt, vorzugsweise befestigt ist, also am anderen der Bauteile fixiert ist. Es ist aber genau so gut möglich, dass das Werkzeug nur temporär unbewegbar bezüglich des anderen Bauteils an dem diesem abgestützt, vorzugsweise befestigt, ist. So kann vorgesehen sein, dass das Werkzeug relativ zum anderen der Bauteile nur in einer Eingriffsstellung eines Eingriffselementes unbewegbar an dem anderen der Bauteile abgestützt, vorzugsweise befestigt, ist, wobei das Eingriffselement auch eine losgelöste Stellung aufweist, in der das Werkzeug relativ zum anderen der Bauteile bewegbar ist.

Das Anschlagelement weist günstigerweise zumindest eine Anschlagfläche auf, mit der es bei Erreichen eines Endes des Verstellweges am anderen der Bauteile oder einem damit verbundenen weiteren Bauteil anschlägt.

An der Anschlagfläche kann zumindest ein, vorzugsweise elastischer, Puffer zur Dämpfung des Anschlagens angeordnet sein. Diese Puffer können insbesondere so ausgelegt werden, dass sie eine missbräuchliche Fehlbedienung bei geöffneter Feststelleinrichtung, bei der die beiden Bauteile der Lenksäule ungewöhnlich kraftvoll relativ zueinander bewegt werden, so dass es zum kräftigen Anschlag am Anschlagelement kommt, abpuffern können, ohne dass es zum Loslösen des Anschlagelementes vom ersten der Bauteile kommt.

Weiters ist es günstig, wenn das Werkzeug zum Loslösen des Anschlagelementes vom ersten der Bauteile nicht an den Anschlagflächen auf den Anschlagkörper einwirkt. Dies kann z.B. erreicht werden, indem das Werkzeug zum Loslösen des Anschlagelementes vom ersten der Bauteile in einem Bereich außerhalb der Anschlagfläche zwischen das Anschlagelement und das erste der Bauteile einführbar ist.

Bei dem Anschlagelement kann es sich um ein Kunststoffteil handeln. Dies kann im Spritzgussverfahren hergestellt sein. Das Kunststoffteil kann aus einem einzigen Material aber auch aus einer Kombination verschiedener Materialien bestehen. Diese können z.B. im Ein- oder Mehrkomponentenspritzguss hergestellt sein. So ist es z.B. denkbar, die Puffer des Anschlagelementes aus einem anderen, insbesondere weicheren Material als das restliche Anschlagelement auszubilden.

Das Anschlagelement kann mittels zumindest eines Zapfens an oder in dem ersten der Bauteile verankert sein. Dabei können die Zapfen fix am Anschlagelement angeordnet sein und in entsprechende Ausnehmungen im ersten der Bauteile eingreifen oder umgekehrt. Es kann auch vorgesehen sein, dass der oder die Zapfen einstückig an das Anschlagelement oder das erste der Bauteile angeformt sind, was zumindest im Falle des Anschlagelements ebenfalls im Ein- oder Mehrkomponentenspritzguss herstellbar ist.

Alternativ ist es jedoch auch denkbar und möglich, das Anschlagelement aus Metall herzustellen, beispielsweise als Aluminiumdruckguss. Aufgrund der erfindungsgemäßen Technik ist dabei dennoch eine hohe Kraftspitze zu Beginn des Crashs vermieden.

Bevorzugte Ausgestaltungsformen der Erfindung sehen vor, dass das Werkzeug, vorzugsweise eine Lasche ist, die Teil einer Energieabsorptionseinrichtung der verstellbaren Lenksäule ist und die Energieabsorptionseinrichtung zumindest im Falle eines Fahrzeugcrashes zumindest die beiden Bauteile der Lenksäule zur Absorption von Energie miteinander verbindet. Die Energieabsorptionseinrichtung und die Feststelleinrichtung können dabei ineinander integriert aber auch getrennt voneinander ausgebildet sein. Die Feststelleinrichtung kann in ihrer geschlossenen Stellung wie an sich bekannt eine reibschlüssige und/oder formschlüssige Verbindung zwischen den beiden Bauteilen der verstellbaren Lenksäule herstellen.

Technisch besonders einfach realisierbare Ausgestaltungsformen der Erfindung sehen vor, dass das Anschlagelement nach außen abstehend an einer Außenfläche des ersten der Bauteile angeordnet ist und das Werkzeug zum Loslösen des Anschlagelementes zwischen das Anschlagelement und die Außenfläche des ersten der Bauteile einführbar ist. Dies umfasst insbesondere auch den Fall, dass das Anschlagelement vollständig außerhalb eines Langlochs angeordnet ist.

Bevorzugte Ausgestaltungsformen erfindungsgemäßer verstellbarer Lenksäulen sehen vor, dass zumindest eines der Bauteile eine zur fahrzeugfesten Fixierung am Kraftfahrzeug vorgesehene Konsoleneinheit und das zweite der Bauteile eine, von der Konsoleneinheit gehaltene Lenkspindellagereinheit zur drehbaren Lagerung einer Lenkspindel ist, wobei die Lenkspindellagereinheit in der geöffneten Stellung der Feststelleinrichtung gegenüber der Konsoleneinheit verstellbar ist und in der geschlossenen Stellung der Feststelleinrichtung in ihrer Position relativ zur Konsoleneinheit festgehalten ist. Dabei kann es sich beim ersten der Bauteile, an dem das Anschlagelement angeordnet ist, um die Konsoleneinheit und bei dem anderen der Bauteile um die Lenkspindellagereinheit handeln. Auch die umgekehrte Ausgestaltung ist denkbar, bei der das erste der Bauteile die Lenkspindellagereinheit und das andere der Bauteile die Konsoleneinheit ist.

Die Verbindung mit der Konsoleneinheit kann indirekt, beispielsweise über einen im Stand der Technik bekannten Spannbolzen, hergestellt sein.

Weitere Merkmale und Einzelheiten bevorzugter Ausgestaltungsformen der Erfindung werden anhand der beispielhaft ausgewählten und in den Figuren gezeigten Ausführungsbeispiele erläutert. Es zeigen:
Fig. 1 bis 4 ein erstes erfindungsgemäßes Ausführungsbeispiel einer Lenksäule;
Fig. 5 bis 7 Detaildarstellungen zum Anschlagelement und zum ersten der Bauteile, an dem das Anschlagelement befestigt werden kann;
Fig. 8 eine Seitenansicht zu Fig. 2;
Fig. 9 eine Seitenansicht zu Fig. 4;
Fig. 10 bis 12 Darstellungen zu einer zweiten erfindungsgemäßen Ausgestaltungsform einer Lenksäule;
Fig. 13 ein drittes erfindungsgemäßes Ausführungsbeispiel einer Lenksäule;
Fig. 14 bis 16 stark schematisierte Darstellungen zu einem vierten erfindungsgemäßen Ausführungsbeispiel;
Fig. 17 Ausführungsbeispiel für Anschlagelement.

Gleichartige oder gleichwirkende Elemente werden in den Figuren mit denselben Bezugszeichen bezeichnet.

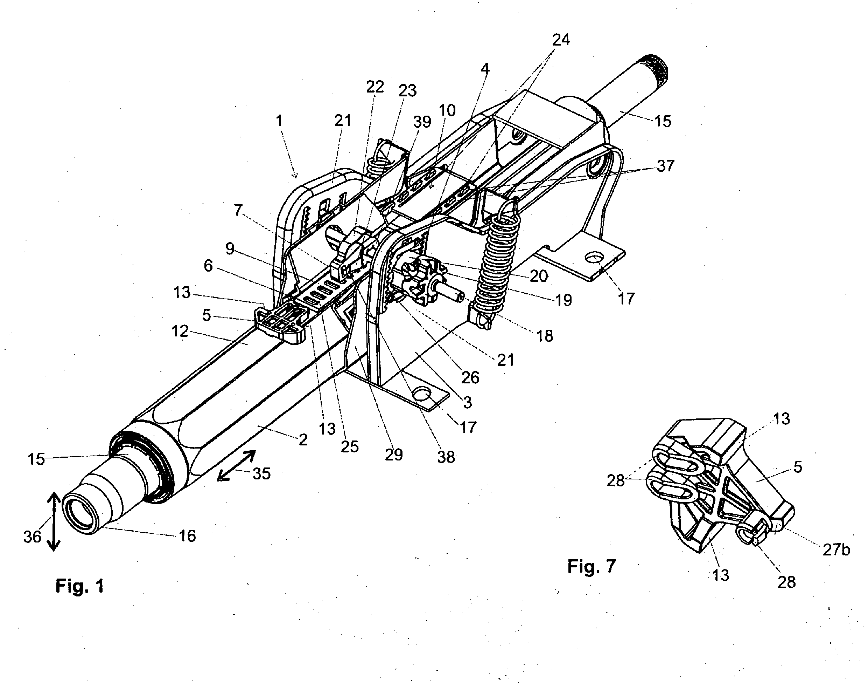

Fig. 1 zeigt in einer perspektivischen Darstellung ein erstes Ausführungsbeispiel einer erfindungsgemäßen Lenksäule. Das erste der beiden relativ zueinander bewegbaren Bauteile 2 der verstellbaren Lenksäule 1 ist in diesem Ausführungsbeispiel als eine Lenkspindellagereinheit ausgebildet, in welcher die Lenkspindel 15 um ihre Längsachse drehbar gelagert ist. Am Lenkradanschluss 16 der Lenkspindel 15 kann ein Lenkrad montiert werden. Zur Befestigung von Lenkspindel 15 und erstem Bauteil 2 an der Karosserie des Fahrzeugs ist ein anderes Bauteil 3, hier in Form einer Konsoleneinheit, vorgesehen. Die Konsoleneinheit wird mit den Befestigungslaschen 17 an der Karosserie des Fahrzeugs in an sich bekannter Art und Weise fixiert. Weiters weist die Konsoleneinheit zwei Seitenwangen 21 auf, zwischen denen die Lenkspindellagereinheit angeordnet ist. Zwischen Lenkspindellagereinheit bzw. dem ersten Bauteil 2 und Konsoleneinheit bzw. dem anderen Bauteil 3 befindet sich im gezeigten Ausführungsbeispiel, wie beim Stand der Technik an sich bekannt, noch das weitere Bauteil 29 in Form eines Zwischenstücks.

Die gezeigte Lenksäule 1 weist eine Feststelleinrichtung 4 auf. Diese umfasst u.a., wie an sich bekannt, den Spannbolzen 18 sowie Nocken 19 und Nockenfolger 20. Durch ein Drehen des Spannbolzens 18 um seine Längsachse mittels eines Motors oder Schwenkhebels (beides hier nicht dargestellt) werden Nocken 19 und Nockenfolger 20 zwischen einer geöffneten Stellung der Feststelleinrichtung 4 und einer geschlossenen Stellung der Feststelleinrichtung 4 gegeneinander verdreht. In der geschlossenen Stellung der Feststelleinrichtung 4 werden die beiden Seitenwangen 21 so gegen das weitere Bauteil 29 und die Lenkspindellagereinheit (erstes Bauteil 2) gedrückt, dass die Lenkspindellagereinheit in ihrer Position relativ zur Konsoleneinheit (Bauteil 3) festgehalten ist. Die Haltekräfte sind dabei so groß, dass zumindest im Normalbetrieb, also wenn keine Crashsituation vorliegt, die Haltekräfte zwischen den beiden Bauteilen 2 und 3 diese in ihrer Lage relativ zueinander fixiert. Die Feststelleinrichtung 4 kann formschlüssig und/oder reibschlüssig arbeiten. Im gezeigten Ausführungsbeispiel wird über die Verzahnung 26, wie an sich bekannt, ein Formschluss bezüglich der Höhenverstellung in Richtung 36 erreicht. Bezüglich der Längsverstellung in Richtung 35 ist das zweite Bauteil 2 reibschlüssig vom anderen Bauteil 3 gehalten, wenn sich die Feststelleinrichtung 4 in der geschlossenen Stellung befindet. Hier sind natürlich aber auch alle anderen, beim Stand der Technik bekannten Ausbildungsformen als Alternativen denkbar.

Die gezeigte Lenksäule 1 ist jedenfalls in der geöffneten Stellung der Feststelleinrichtung 4 sowohl in den Richtungen 36 höhenverstellbar als auch in den Richtungen 35 längenverstellbar. Es gibt aber natürlich auch Ausführungsbeispiele der Erfindung, bei denen die Lenksäule 1 entweder nur höhenverstellbar oder nur längenverstellbar ist.

Neben der Feststelleinrichtung 4 weist das gezeigte Ausführungsbeispiel der Lenksäule 1 gemäß der Fig. 1 bis 4 zusätzlich auch eine Energieabsorptionseinrichtung 10 auf, welche die beiden Bauteile 2 und 3 im Falle eines Fahrzeugcrashes zur Absorption von Energie miteinander verbindet. Im gezeigten Ausführungsbeispiel umfasst diese Energieabsorptionseinrichtung 10 eine Reißbiegelasche 9, welche mittels der Haken-Ösen-Verbindung 37 mit der Lenkspindellagereinheit bzw. dem ersten Bauteil 2 fix verbunden ist. Die Reißbiegelasche 9 weist in der Nähe der Haken-Ösen-Verbindung 37 den Aufreißbereich 24 auf, welcher zusätzlich zum reinen Verbiegen der Reißbiegelasche 9 im Crashfall für die gewünschte Energieabsorption sorgt. Um im Crashfall wirken zu können, muss die Reißbiegelasche 9 zumindest im Crashfall an der Konsoleneinheit bzw. dem anderen Bauteil 3 festgehalten bzw. fixiert wer-den. Hierfür ist beim konkret gezeigten ersten Ausführungsbeispiel das hakenförmig ausgebildete Eingriffselement 7 vorgesehen. Dieses weist zumindest einen Zahn 38 auf, mit welchem es in der in Fig. 1 gezeigten Eingriffstellung in eine der Ausnehmungen 25 in der Reiß-biegelasche 9 eingreift. Im gezeigten Ausführungsbeispiel ist das hakenförmige Eingriffselement 7 selbst frei drehbar auf der Spannachse 18 der Feststelleinrichtung 4 gelagert. Eine Feder 22 eines ebenfalls auf dem Spannbolzen 18 angeordneten Federkörpers 39 drückt allerdings das hier gezeigte Eingriffselement 7 permanent in Richtung Reißbiegelasche 9 bzw. Mitnehmerarme 23. Die Mitnehmerarme 23 greifen in ein Langloch im Eingriffselement 7 ein und sind ebenfalls Teil des Federkörpers 39, zu welchem auch die Feder 22 gehört. Der Federkörper 39 ist formschlüssig auf dem Spannbolzen 18 gelagert, sodass jede Drehbewegung des Spannbolzens 18 um seine Längsachse auf den Federkörper 39 übertragen wird. Dies dient dazu, dass das Eingriffselement 7 in der geöffneten Stellung der Feststelleinrichtung 4 wegen des Eingriffs der Mitnehmerarme 23 in das genannte Langloch mit seinem Zahn 38 außer Kontakt mit der Reißbiegelasche 9 bzw. deren Ausnehmung 25 gebracht werden kann, damit im geöffneten Zustand der Feststelleinrichtung 4 die beiden Bauteile 2 und 3 gegeneinander verschoben werden können, ohne dass dabei die Reißbiegelasche 9 verformt wird. Wird die Feststelleinrichtung 4 durch Drehen des Spannbolzens 18 dann wieder in die, in Fig. 1 gezeigte geschlossene Stellung gebracht, so wird dabei der Federkörper 39 wieder so weit mitgeschwenkt, dass die Feder 22 das Eingriffselement 7 wieder gegen die Reißbiegelasche 9 drückt. Dabei kann es vorkommen, dass der Zahn 38 des Eingriffselements 7 unmittelbar in eine Ausnehmung 25 an der Reißbiegelasche 9 eingreift. Es kann aber auch passieren, dass der Zahn 38 auf einem Steg zwischen zwei benachbarten Ausnehmungen 25 zu liegen kommt. Der Eingriff in eine der beiden Ausnehmungen 25 erfolgt dann erst, wenn das Bauteil 2 im Crashfall relativ zum Bauteil 3 verschoben wird. Sobald es im Crashfall zum Eingriff des Eingriffselements 7 in die Reißbiegelasche 9 gekommen ist und das erste Bauteil 2 weiter relativ zur Konsoleneinheit bzw. zum anderen Bauteil 3 verschoben wird, hält das Eingriffselement 7 die Reißbiegelasche 9 am anderen Bauteil 3 fest, sodass es zu einem Umbiegen und Aufreißen der Aufreißbereiche 24 kommt, womit die gewünschte Energieabsorption vonstatten geht. Es ist hier festzustellen, dass anstelle einer Reißbiegelasche die Energieabsorption auch durch eine reine Biegung, beispielsweise mittels einer Biegelasche oder durch eine reine Trennoperation bewirkt sein kann.

Im gezeigten Ausführungsbeispiel ist die Energieabsorptionseinrichtung 10 somit in die Feststelleinrichtung 4 integriert. Dies muss nicht zwingend so sein. Es können auch alle anderen beim Stand der Technik bekannten Energieabsorptionsmechanismen bei erfindungsgemäß ausgebildeten Lenksäulen angewendet werden. Diese können in die Feststelleinrichtung 4 integriert, aber auch davon getrennt ausgebildet sein.

Gemäß der Erfindung sind bei der bisher besprochenen Lenksäule 1 ein Anschlagelement 5 zur Begrenzung des Verstellweges zwischen Bauteil 2 und 3 und ein Werkzeug 6 vorhanden, wobei das Werkzeug 6 der Lenksäule 1 im Crashfall zwischen das Anschlagelement 5 und das erste Bauteil 2 eingeführt wird, um das Anschlagelement 5 unter Vermeidung oder zumindest starker Reduzierung von Kraftspitzen vom ersten Bauteil 2 loszulösen. Bei der dargestellten Variante gemäß des ersten Ausführungsbeispiels ist das Werkzeug 6 als Teil einer Lasche, nämlich der Reißbiegelasche 9 ausgebildet. Alternativ hierzu kann es sich bei der Lasche, von der das Werkzeug 6 einen Teil bildet, auch um Biegelaschen 8 oder reine Reiß-laschen handeln. Konkret handelt es sich beim Werkzeug 6 im ersten Ausführungsbeispiel um das zum Lenkradanschluss 16 weisende Ende der Reißbiegelasche 9. Im Sinne der Vermeidung von Kraftspitzen ist es günstig, wenn, wie im hier gezeigten Ausführungsbeispiel, das Werkzeug 6 als eine keilförmige bzw., bezüglich der Richtung 35 gesehen, schräge Fläche 27a oder Spitze ausgebildet ist. Zusätzlich oder alternativ kann eine entsprechende Schrägfläche 27b auch in dem Bereich am Anschlagelement 5 angeordnet sein, in dem im Crashfall das Werkzeug 6 auf das Anschlagelement 5 auftrifft. Im konkret gezeigten Ausführungsbeispiel ist, wie allgemein in günstigen Ausführungsformen, vorgesehen, dass das Anschlagelement 5 nach außen abstehend an einer Außenfläche 12 des ersten Bauteils 2 angeordnet ist und das Werkzeug 6 zum Loslösen des Anschlagelementes 5 zwischen das Anschlagelement 5 und die Außenfläche 12 des ersten Bauteils 2 einführbar ist. Durch dieses Einführen bzw. Einschieben des Werkzeugs 6 zwischen Anschlagelement 5 und das erste Bauteil 2 wird das Anschlagelement 5 vom ersten Bauteil 2 abgehebelt und/oder abge-schert, wodurch die unerwünschten Kraftspitzen beim Loslösen des Anschlagelementes 5 vom Bauteil 2 vermieden bzw. zumindest stark reduziert sind. Es ist dabei zu bevorzugen, dass das Anschlagelement 5 vom ersten Bauteil 2 abgehebelt wird, besonders bevorzugt unter Vermeidung einer Scher- oder Bruchoperation, zu weiteren Absenkung der unerwünschten Kraftspitze beim Loslösen.

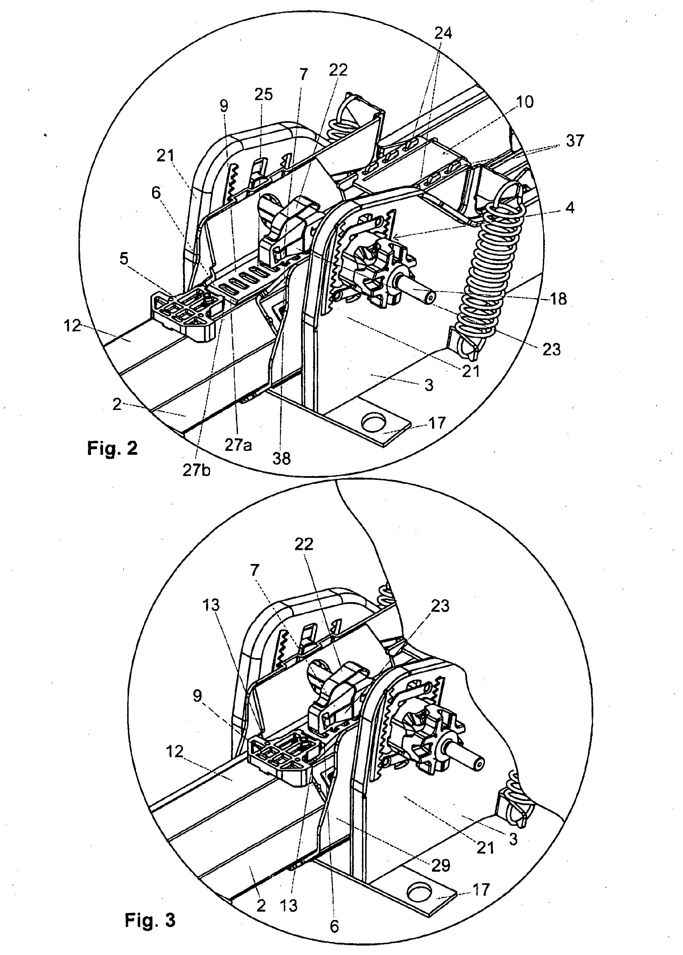

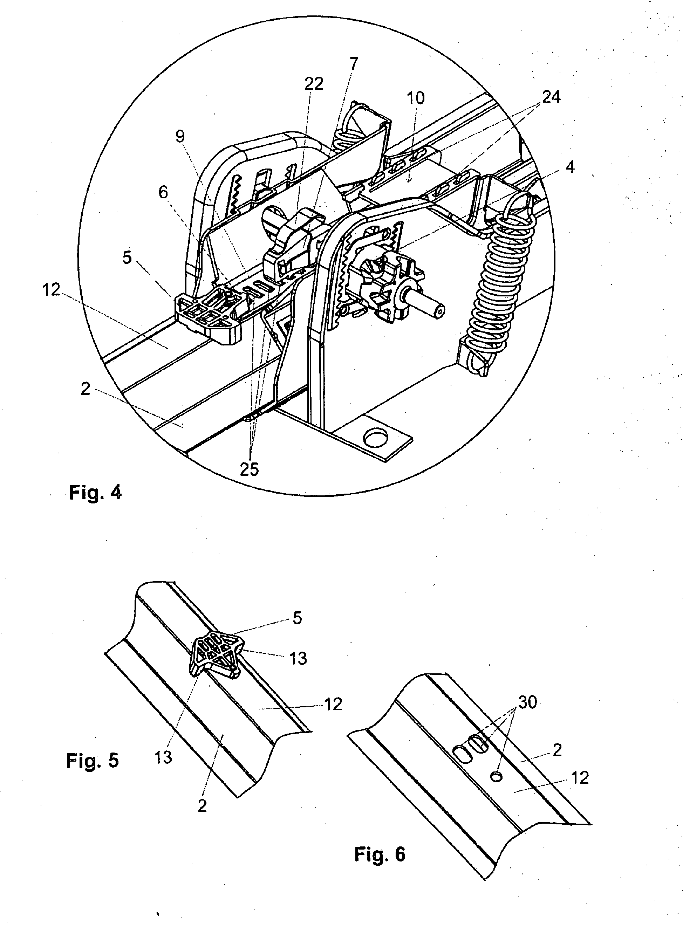

In den Fig. 2 bis 4 sind Ausschnitte im Bereich von Feststelleinrichtung 4, Anschlagelement 5, Werkzeug 6 und Energieabsorptionseinrichtung 10 der in Fig. 1 dargestellten Lenksäule gezeigt. In Fig. 2 ist beispielhaft eine Stellung im Normalbetrieb, in dem das Fahrzeug bewegt wird, gezeigt. Die Feststelleinrichtung 4 befindet sich in der geschlossenen Stellung, in der sie die beiden Bauteile 2 und 3 relativ zueinander festhält. Das Eingriffselement 7 befindet sich in Eingriffstellung an der Reißbiegelasche 9, sodass im Falle eines Fahrzeugcrashes die bereits beschriebene Energieabsorption vonstatten gehen kann. Fig. 3 zeigt eine Stellung im Normalbetrieb, bei dem das Ende des Verstellweges in Richtung 35 erreicht ist, wobei nur ein kleiner Ausschnitt der Lenksäule dargestellt ist. In dieser Stellung liegen die Anschlagflächen 13 am weiteren Bauteil 29 und damit auch indirekt am Bauteil 3 an, sodass auch bei geöffneter Feststelleinrichtung 4, bei der auch das Eingriffselement 7 nicht in Eingriff mit der Reißbiegelasche 9 steht, ein weiteres Einschieben des Bauteils 2 in den Bauteil 3 in Richtung weg vom Lenkradanschluss 16 verhindert ist. Dies ist die normale Funktion des Anschlagelementes 5, welche darin besteht, den Verstellweg zwischen den beiden Bauteilen 2 und 3 in dieser Richtung zu begrenzen. In dieser Situation, in der es bisher nicht zu einem Fahrzeugcrash gekommen ist, ist das Werkzeug 6 nicht zwischen Anschlagelement 5 und ersten Bauteil 2 eingeschoben, sodass das Anschlagelement 5 fest am zweiten Bauteil 2 befestigt ist. Der Vollständigkeit halber wird darauf hingewiesen, dass in Fig. 3 die Feststelleinrichtung 4 in der geschlossenen Stellung dargestellt ist, obwohl das Anschlagelement 5 ja genau dann zur Begrenzung des Verstellweges dient, wenn die Feststelleinrichtung 4 in der geöffneten Stellung ist. Fig. 4 zeigt nun den Crashfall, bei dem eine Kollision des Fahrzeuges stattfindet bzw. stattgefunden hat und das Bauteil 2 bei geschlossener Feststelleinrichtung 4, zur Absorption von durch den Aufprall des Fahrzeuglenkers auf das Lenkrad entstehender Energie, in das Bauteil 3 eingeschoben wird. Vor dem Eintritt des Crashfalls lag die Situation gemäß Fig. 2 vor.

Im Crashfall gemäß Fig. 4 wird das Bauteil 2, also die Lenkspindellagereinheit in das Bauteil 3, also die fahrzeugfeste Konsoleneinheit in Richtung weg vom Lenkradanschluss 16 und hin in Richtung zur Fahrzeugfront eingeschoben. Über den Eingriff des Eingriffselementes 7 in die Reißbiegelasche 9 wird diese dabei am anderen Bauteil 3 festgehalten, sodass es zu einem Umbiegen der Reißbiegelasche 9 und zu einem Aufreißen der Aufreißbereiche 24 kommt, wobei in gewünschter Art und Weise die in die Lenksäule 1 eingetragene Energie abgebaut wird. Gleichzeitig wird das Werkzeug 6 in Form des vorderen Endes der Reißbiegelasche 9 zwischen das Anschlagelement 5 und die Außenfläche 12 des Bauteils 2 eingeführt bzw. eingeschoben, wodurch, wie in Fig. 4 angedeutet, das Anschlagelement 5 vom Bauteil 2 abgehebelt bzw. abgeschert wird, ohne dass es dabei zu einer störenden Kraftspitze kommt. Durch das Entfernen des Anschlagelementes 5 von dem Bauteil 2 ist eine weitere Verschiebung des Bauteils 2 gegenüber dem Bauteil 3 bei gleichzeitiger Energieabsorption mittels Reißbiegelasche 9 und Reibung zwischen den Gleitflächen möglich. Eine Kraftspitze, die beim Abbrechen des Anschlagelementes 5 beim Stand der Technik erforderlich ist, ist auf erfindungsgemäße Art und Weise hier vermieden. Lediglich in dem Fall, in dem beim Ablösen des Anschlagelementes 5 eine Scheroperation vom Werkzeug 6 ausgeführt wird, entsteht eine Kraftspitze. Diese ist jedoch deutlich kleiner als sie für eine Bruchoperation gemäß Stand der Technik erforderlich wäre. Trotz der geringen Kräfte, welche zu Ablösung des Anschlagelementes 5 mittels Werkzeug 6 notwendig sind, kann das Anschlagelement 5 robust und fest ausgestaltet und am Bauteil 2 befestigt sein, sodass es auch hohe Widerstandskräfte aufbringen kann, wenn das Bauteil 2 bei geöffneter Feststelleinrichtung 4 vom Fahrer missbräuchlich unnötig stark mit dem Anschlagelement 5 gegen das Bauteil 3, also die Konsoleneinheit gestoßen wird.

In den Fig. 5 bis 7 finden sich noch einmal Detaildarstellungen zum ersten Ausführungsbeispiel, wobei der Ordnung halber darauf hingewiesen wird, dass das Anschlagelement 5 etwas anders als in den Fig. 1 bis 4 ausgebildet ist, was aber nichts an der generellen Funktionsweise ändert. In Fig. 5 ist das Anschlagelement 5 am Bauteil 2 bzw. dessen Außenfläche 12 befestigt. In Fig. 6 ist das Anschlagelement 5 abgenommen, sodass man die Ausnehmungen 30 im Bauteil 2 sieht, in die zur Befestigung des Anschlagelementes 5 am Bauteil 2 die Zapfen 28 des Anschlagelementes 5 eingreifen. Es kann sich dabei um reibschlüssige oder sonstige kraftschlüssige Verbindungen zwischen Zapfen 28 und Ausnehmungen 30, wie z.B. auch Schnappverbindungen handeln. Alternativ sind auch entsprechend durch Aushebeln oder Abscheren lösbare formschlüssige Verbindungen denkbar. Natürlich können alternativ die Zapfen auch am Bauteil 2 fix angeordnet sein und in entsprechende Ausnehmungen 30 am Anschlagelement 5 eingreifen.

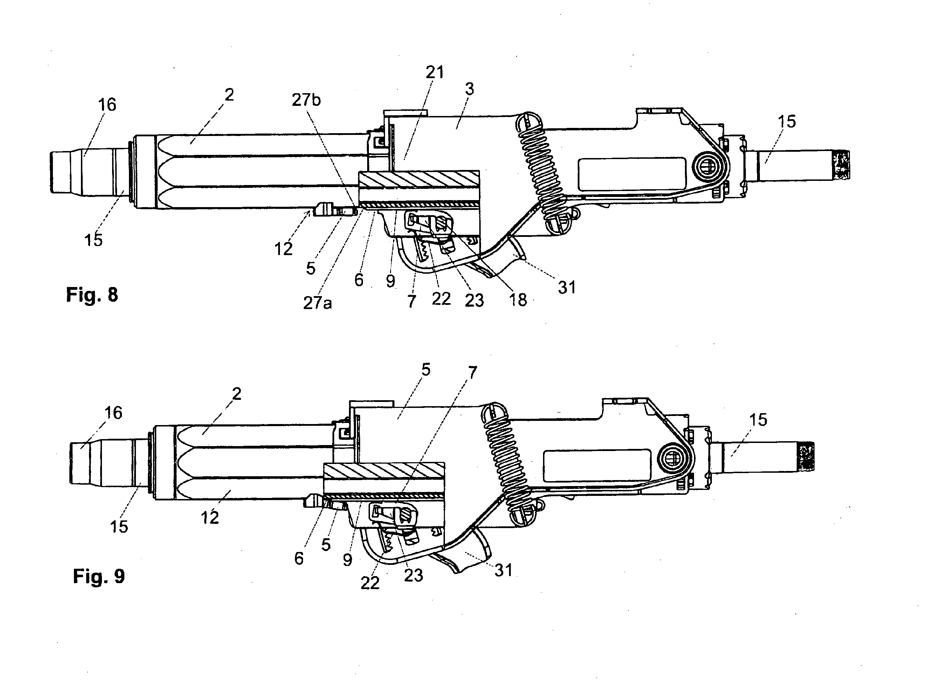

Die Fig. 8 und 9 zeigen noch einmal das erste Ausführungsbeispiel jeweils in einer teilweise geschnittenen Seitenansicht. Fig. 8 zeigt den Normalbetrieb analog zu Fig. 2. Fig. 9 zeigt den Crashfall analog zu Fig. 4.

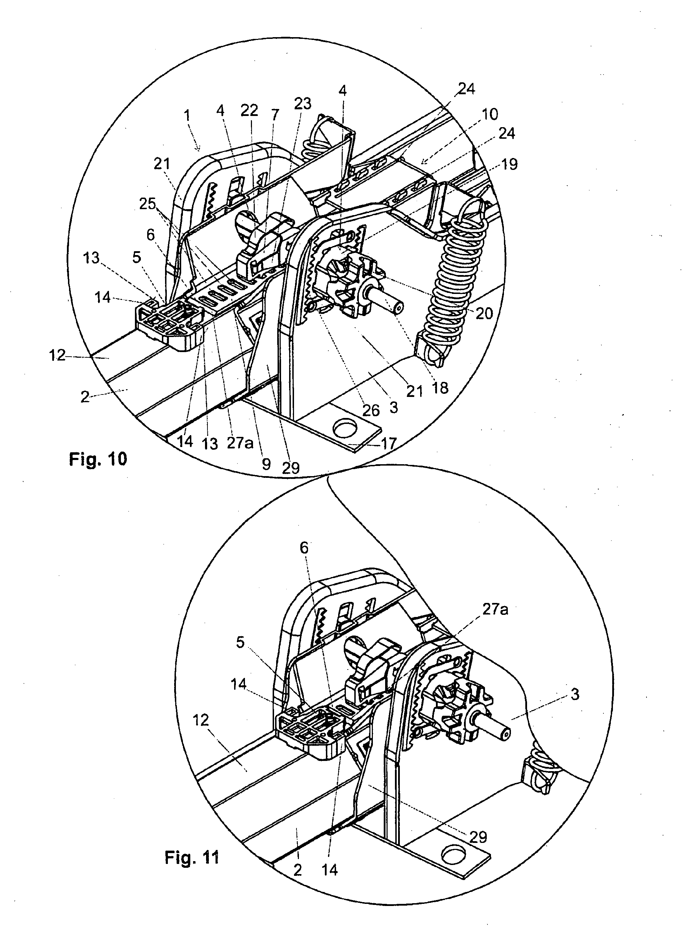

In den Fig. 10 bis 12 ist ein zweites Ausführungsbeispiel der Erfindung dargestellt, welches auf dem ersten Ausführungsbeispiel basiert, aber zusätzlich an den Anschlagflächen 13 des Anschlagelementes 5 mit Puffern 14 ausgerüstet ist. Bis auf diesen Unterschied entspricht der wesentliche Grundaufbau wie auch die wesentlichen Grundfunktion des zweiten Ausführungsbeispiels dem bzw. der des ersten Ausführungsbeispiels, sodass hierauf nicht noch einmal eingegangen werden muss. Bei der in den Fig. 10 bis 12 dargestellten Variante wird auch in dem Fall, dass die Lenksäule 1 bzw. ihr Bauteil 2 vollständig an das Ende des Verstellweges herangefahren wurde, eine Kraftspitze zum Öffnen des weiteren Verschiebeweges zumindest reduziert. Hierzu sind die Puffer 14 vorgesehen, die den normalen Betätigungskräften des Fahrers beim Verstellen der Lenksäule 1 widerstehen und bevorzugt elastisch bzw. federnd ausgebildet sind. Weiters können die Puffer 14 auch dazu dienen, im Missbrauchsfall bei geöffneter Feststelleinrichtung, ein übermäßig starkes Anschlagen des Anschlagelementes 5 am weiteren Bauteil 29 und damit an der Konsoleneinheit bzw. am anderen Bauteil 3 abzupuffern, ohne dass es hierdurch zum Ablösen des Anschlagelementes 5 von dem zweiten Bauteil 2 kommt.

Die Puffer 14 können unterschiedlich in Form und Materialwahl ausgestaltet sein. Es kann sich um elastische Hohlkörper wie im gezeigten Ausführungsbeispiel handeln. Es können aber auch andere geeignete elastische Materialien eingesetzt werden. Besonders bevorzugte Ausgestaltungsformen sehen vor, dass sowohl das Anschlagelement 5 als auch die Puffer aus Kunststoff ausgebildet sind. Um die Puffer 14 entsprechend weicher als das restliche Anschlagelement 5 auszubilden, kann beispielsweise ein weicherer Kunststoff verwendet werden. Solche Teile sind beim Stand der Technik ohne Weiteres im Spritzgussverfahren, insbesondere im Mehrkomponentenspritzguss, herstellbar. Im gezeigten Ausführungsbeispiel sind die Puffer mit einer entsprechend dünnen Wandstärke versehen, sodass sie elastisch nachgeben können.

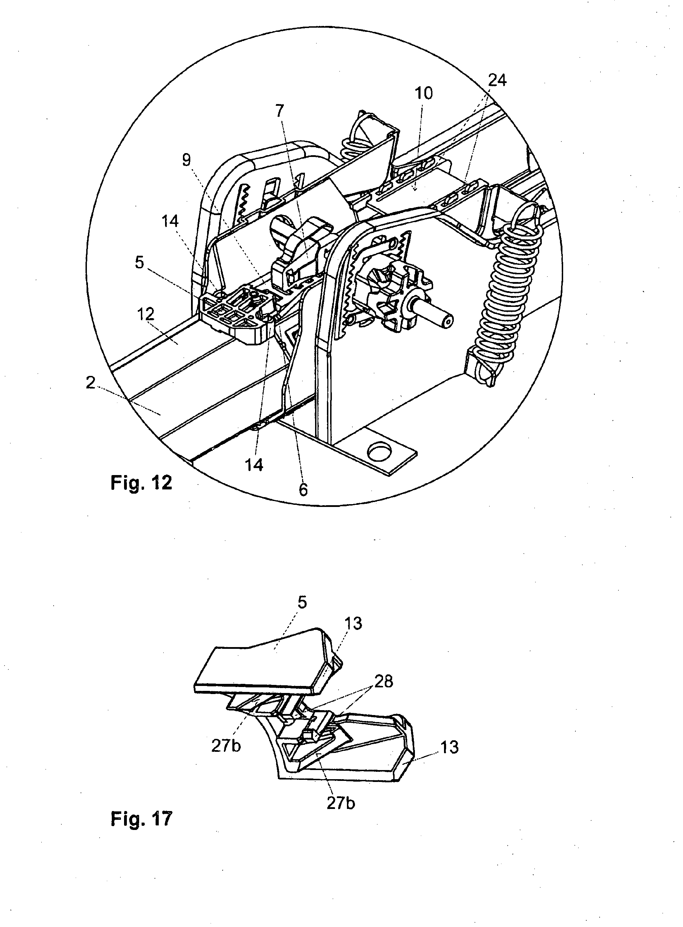

Verschiebt der Fahrer das Bauteil 2 der Lenksäule 1 so weit, dass das Anschlagelement mit seinen Anschlagflächen 13 an den Puffern 14 am Ende des Verstellweges am weiteren Bauteil 29 bzw. am Bauteil 3 anschlägt und wendet er keine überhöhten Kräfte zur Verschiebung auf, so sind die Puffer 14 in ihrer vollen Federlänge erhalten. Erfolgt im Crashfall die Einwirkung einer höheren Kraft, so werden die Puffer 14 zusammengedrückt und gleichzeitig das Werkzeug 6 in Richtung Lenkradanschluss 16 geschoben, sodass das Anschlagelement 5 wie in Fig. 12 gezeigt, wie beim ersten Ausführungsbeispiel vorab beschrieben, entsprechend ausgehebelt und/oder abgeschert wird. Wenn die Puffer 14 federnd ausgelegt sind, würden sich die Puffer 14 auch dann in ihre Ausgangsgröße zurückfedernd bewegen, wenn der Fahrer zwar zur Verstellung eine erhöhte Kraft aufwendet, jedoch vor dem Schließen der Feststelleinrichtung 4 seine auf das Bauteil 2 aufgebrachte Kraft reduziert hat. Sollten im Ausnahmefall die Puffer 14 mit voller Kraft vom Fahrer gegen das Bauteil 29 bzw. 3 geschoben und die Feststelleinrichtung 4 in dieser Position verriegelt werden, so steigt die im Crashfall erforderliche Lösekraft zum Loslösen des Anschlagelementes 5 und damit zur Freigabe der weiteren Verschiebung unter Einsatz der Energieabsorptionseinrichtung 10 entsprechend an. Durch eine entsprechend exakte Auslegung des Werkzeugs 6 kann jedoch selbst in diesem Fall die Kraftspitze, die zum Loslösen des Anschlagelementes 5 notwendig ist, auf ein erträgliches Maß verringert werden. In Fig. 11 ist in einem kleinen Ausschnitt der Lenksäule die Situation veranschaulicht, in der die Lenksäule in der Längsrichtung bis an den Anschlag des Verschiebeweges eingefahren ist und das Anschlagelement in ausgefederter Position der Puffer 14 mit der am Puffer 14 angeordneten Anschlagfläche 13 in Kontakt mit dem Anschlag am weiteren Bauteil 29 in Kontakt gebracht ist.

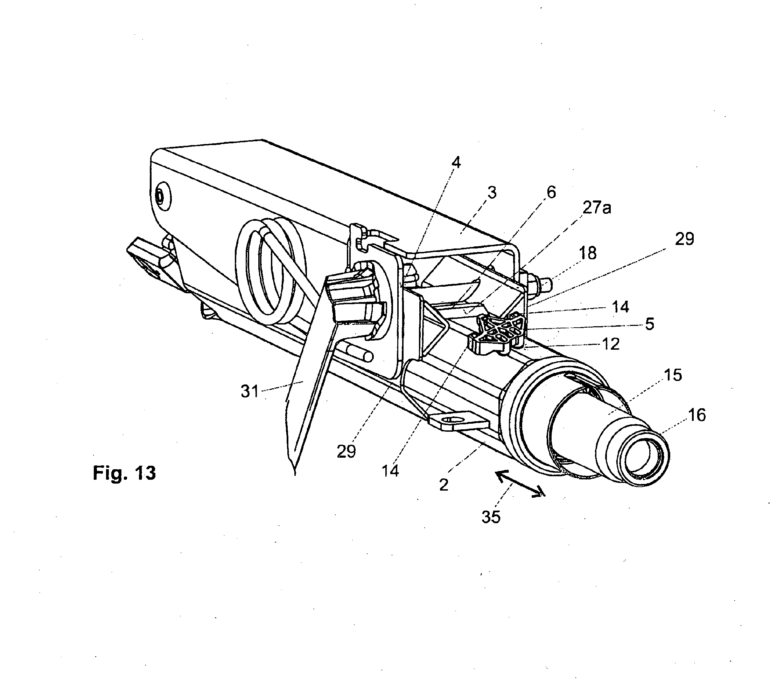

In Fig. 13 ist ein drittes erfindungsgemäßes Ausführungsbeispiel gezeigt, bei dem der Bauteil 2, also die Lenkspindel 15 lagernde Lenkspindellagereinheit relativ zur fahrzeugfesten Konsoleneinheit in Form des Bauteils 3 nur in Richtung 35 längsverstellbar ist. Die Feststelleinrichtung 4 ist, wie beim Stand der Technik bekannt, ausgebildet und wird durch Schwenken des Hebels 31 von Hand zwischen der geschlossenen und der geöffneten Stellung verstellt. In der geöffneten Stellung der Feststelleinrichtung 4 sind die Bauteile 2 und 3 relativ zueinander verstellbar, um die Position des hier nicht dargestellten, am Lenkradanschluss 16 zu befestigenden Lenkrades nach Fahrerwunsch einstellen zu können. Im Unterschied zu den bisher geschilderten Ausgestaltungsformen ist bei dem Ausführungsbeispiel gemäß Fig. 13 keine Reißbiegelasche oder Biegelasche 8 bzw. 9 zur Energieabsorption im Crashfall vorgesehen. Bei dem sehr einfach gehaltenen Ausführungsbeispiel gemäß Fig. 13 wird die Energie im Crashfall bei geschlossener Feststelleinrichtung 4 im Wesentlichen durch Reibung zwischen dem Bauteil 2 und den Bauteilen 3 und 29 abgebaut. Das Werkzeug 6 ist im gezeigten Ausführungsbeispiel gemäß Fig. 13 fix am weiteren Bauteil 29 und damit an der Konsoleneinheit in Form des anderen Bauteils 3 angeordnet. Auch hier weist das Werkzeug 6 eine keilförmige Schräge Fläche 27a auf, mit der es im Crashfall zwischen das Anschlagelement 5 und das Bauteil 2 eingeführt bzw. eingeschoben wird, damit das Anschlagelement 5 im Crashfall ohne Erzeugung einer Kraftspitze vom Bauteil 2 gelöst werden kann, um den Verschiebeweg zur Energieabsorption zwischen den Bauteilen 2 und 3 zu verlängern. Die Befestigung des Anschlagelementes 5 sowie seine Ausgestaltungsform mit den Puffern 14 entspricht im Wesentlichen den Ausführungsbeispielen gemäß Fig. 10 bis 12. Die Befestigung am Bauteil 2 kann also wie in den Fig. 5 bis 7 realisiert ausgebildet sein. Bei dem Ausführungsbeispiel gemäß Fig. 13 ist das Werkzeug 6 somit permanent über das weitere Bauteil 29 am anderen Bauteil 3, also der Konsoleneinheit, befestigt bzw. fixiert.

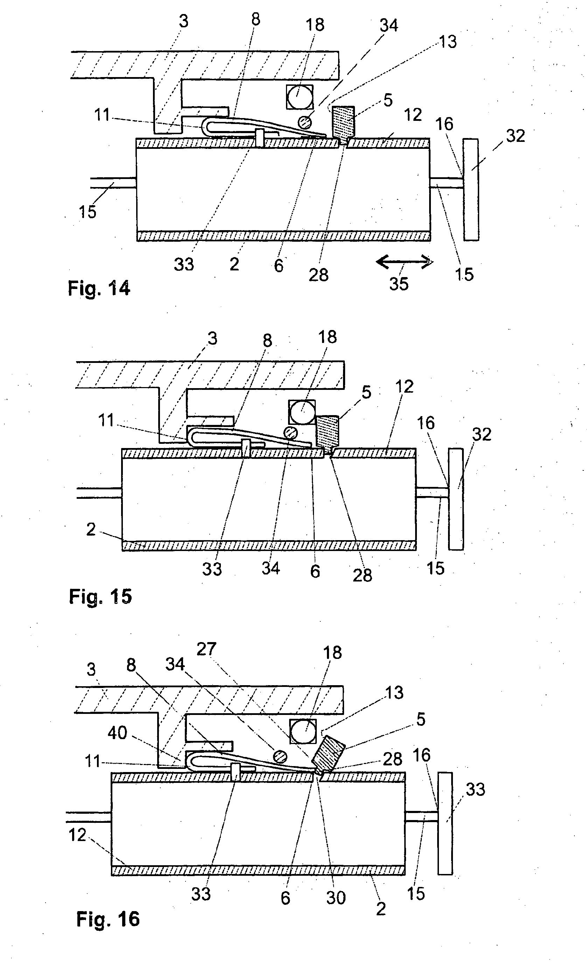

In den Fig. 14 bis 16 ist ein weiteres erfindungsgemäßes Ausführungsbeispiel skizzenhaft dargestellt. Bei dem Bauteil 3 handelt es sich wiederum um eine fahrzeugfeste Konsoleneinheit. Das Bauteil 2 ist relativ dazu zumindest in den Richtungen 35, also in Längsrichtung verstellbar, wenn eine hier nicht vollständig dargestellte Feststelleinrichtung 4, welche wie in den anderen Ausführungsbeispielen ausgebildet sein kann, sich im geöffneten Zustand befindet. In den Darstellungen gemäß Fig. 14 bis 16 ist von der Feststelleinrichtung 4 lediglich der Spannbolzen 18 dieses Ausführungsbeispiels im Schnitt gezeigt. Dieser Spannbolzen 18 hat in dem Ausführungsbeispiel gemäß Fig. 14 bis 16 auch die Funktion, dass er als Gegenanschlag für die Anschlagfläche 13 des Anschlagelementes 5 dient, wenn der Verstellweg eines seiner Enden erreicht. Diese Anschlagsituation ist in Fig. 15 dargestellt.

In dem hier diskutierten vierten Ausführungsbeispiel ist das Werkzeug 6 ebenfalls als Teil einer Lasche ausgebildet. Im hier konkret gezeigten Fall handelt es sich um eine Biegelasche 8. Diese ist an ihrem einen Ende mittels der Fixierung 33 am zweiten Bauteil 2 fixiert. Die Biegelasche 8 weist eine Umlenkung 11 auf. Am der Fixierung 33 entgegen gesetzten Ende der Lasche 8 befindet sich das Werkzeug 6. Der Niederhalter 34 ist am Bauteil 2 befestigt und sorgt dafür, dass die Biegelasche 8 zumindest im Bereich des Werkzeugs 6 an der Außenfläche 12 des Bauteils 2 anliegt.

Im vierten Ausführungsbeispiel handelt es sich um eine erfindungsgemäße Variante, bei der vorgesehen ist, dass das Werkzeug 6 mit einer Umlenkung 11, vorzugsweise mit einem umgebogenen Bereich einer Lasche, in Wirkverbindung steht und das Werkzeug 6 zumindest beim Loslösen des Anschlagelementes 5 vom ersten der Bauteile 2 mittels der Umlenkung 11 am anderen der Bauteile 3 abgestützt, vorzugsweise befestigt, ist.

Konkret ist in diesem Ausführungsbeispiel im in Fig. 16 dargestellten Crashfall vorgesehen, dass die Biegelasche 8 mit ihrer Umlenkung 11 an einem entsprechenden fahrzeugfesten Anschlag 40 des Bauteils 3 anliegt, sodass die Biegelasche 8 beim crashbedingten Einschieben des Bauteils 2 in der Umlenkung 11 umgeformt wird und dadurch mit ihrem das Werkzeug 6 tragenden Ende in Richtung des Lenkrads 33 geschoben wird. Hierdurch wird wiederum erreicht, dass das Werkzeug 6 zwischen dem ersten Bauteil 2 bzw. dessen Außenfläche 12 und dem Anschlagelement 5 eingeführt bzw. eingeschoben wird, um letzteres mit seinem Zapfen 28 aus der Ausnehmung 30 herauszuhebeln und/oder abzuscheren. Zu beachten ist bei diesem Ausführungsbeispiel vor allem, dass sich durch das Abstützen der Umlenkung 11 der Biegelasche 8 am Bauteil 3 bzw. dessen Anschlag 40 eine Übersetzungsfunktion ergibt. So wird das Werkzeug 6 doppelt so weit in Richtung Lenkrad 33 geschoben, wie das Bauteil 2 beim Einschieben in das Bauteil 3 in die Gegenrichtung geschoben wird. Hierdurch wird das Anschlagelement 5 mittels des Werkzeugs 6 vom Bauteil 2 losgelöst bevor dies der Spannbolzen 18 tut.

Der Vollständigkeit halber wird darauf hingewiesen, dass eine entsprechende Umlenkung 11 mit Übersetzung auch durch ein Zugseil oder dergleichen erreicht werden kann.

Auch im vierten Ausführungsbeispiel ist es prinzipiell denkbar und möglich, durch entsprechende Pufferelemente 14 die Kraftspitze beim Herauslösen weiter abzusenken, wie dies am Ausführungsbeispiel gemäß der Fig. 10 bis 13 bereits veranschaulicht ist. Die Fig. 14 bis 16 veranschaulichen jedenfalls eine alternative Lösung, bei der das Werkzeug 6 entgegen der Verschieberichtung des Bauteils 2 relativ zum Bauteil 3 im Crashfall bewegt wird und damit das Anschlagelement 5 aushebelt. Auch auf diese Weise ist es möglich, die Kraftspitze abzusenken bzw. zu vermeiden. Im gezeigten vierten Ausführungsbeispiel besteht die Biegelasche 8 bzw. das Werkzeug 6 bevorzugt aus einem dünnen Federstahlband.

Die Fig. 17 veranschaulicht eine weitere Ausführungsform für das Anschlagselement 5. Die Schrägflächen 27b dienen zum Aushebeln des Anschlagelements 5 im Crashfall. Die Zapfen 28 sind hier als Clipse ausgebildet.

**Legende zu den Hinweisziffern:**

| | | | |
|---|---|---|---|
| 1 | Lenksäule | 23 | Mitnehmerarme |
| 2 | Bauteil | 24 | Aufreißbereich |
| 3 | Bauteil | 25 | Ausnehmungen |
| 4 | Feststelleinrichtung | 26 | Verzahnung |
| 5 | Anschlagelement | 27a | Fläche |
| 6 | Werkzeug | 27b | Schrägfläche |
| 7 | Eingriffselement | 28 | Zapfen |
| 8 | Biegelasche | 29 | weiteres Bauteil |
| 9 | Reißbiegelasche | 30 | Ausnehmung |
| 10 | Energieabsorptionseinrichtung | 31 | Hebel |
| 11 | Umlenkung | 32 | Lenkrad |
| 12 | Außenfläche | 33 | Fixierung |
| 13 | Anschlagfläche | 34 | Niederhalter |
| 14 | Puffer | 35 | Richtung |
| 15 | Lenkspindel | 36 | Richtung |
| 16 | Lenkradanschluss | 37 | Haken-Ösen-Verbindung |
| 17 | Befestigungslaschen | 38 | Zahn |
| 18 | Spannbolzen | 39 | Federkörper |
| 19 | Nocken | 40 | Anschlag |
| 20 | Nockenfolger | | |
| 21 | Seitenwange | | |
| 22 | Feder | | |

## Patentansprüche

1. Verstellbare Lenksäule (1) für ein Kraftfahrzeug, wobei die Lenksäule (1) zumindest zwei Bauteile (2, 3) und zumindest eine Feststelleinrichtung (4) aufweist, wobei die Bauteile (2, 3) in einer geöffneten Stellung der Feststelleinrichtung (4) in ihrer Position relativ zueinander entlang eines Verstellweges verstellbar und in einer geschlossenen Stellung der Feststelleinrichtung (4) in ihrer Position relativ zueinander festgehalten sind und zumindest an einem ersten der Bauteile (2) ein, den Verstellweg begrenzendes und bei Überschreitung eines Kraftwertes vom ersten der Bauteile (2) loslösbares Anschlagelement (5) angeordnet ist, **dadurch gekennzeichnet, dass** die verstellbare Lenksäule (1) ein Werkzeug (6) aufweist, welches zum Loslösen des Anschlagelementes (5) zumindest bereichsweise zwischen das Anschlagelement (5) und das erste der Bauteile (2) einführbar ist.

2. Verstellbare Lenksäule (1) nach Anspruch 1, **dadurch gekennzeichnet, dass** das Werkzeug (6) beim Einführen zwischen das Anschlagelement (5) und das erste der Bauteile (2) das Anschlagelement (5) vom ersten der Bauteile (2) abhebelt und/oder abschert.

3. Verstellbare Lenksäule (1) nach zumindest einem der vorangehenden Ansprüche, **dadurch gekennzeichnet, dass** das Werkzeug (6) zumindest beim Loslösen des Anschlagelementes (5) vom ersten der Bauteile (2) am anderen der Bauteile (3) abgestützt, vorzugsweise befestigt, ist.

4. Verstellbare Lenksäule (1) nach Anspruch 3, **dadurch gekennzeichnet, dass** das Werkzeug (6) relativ zum anderen der Bauteile (3) permanent unbewegbar an dem anderen der Bauteile (3) abgestützt, vorzugsweise befestigt, ist, oder dass das Werkzeug (6) relativ zum anderen der Bauteile (3) nur in einer Eingriffsstellung eines Eingriffselementes (7) unbewegbar an dem anderen der Bauteile (3) abgestützt, vorzugsweise befestigt, ist und das Eingriffselement (7) auch eine losgelöste Stellung aufweist, in der das Werkzeug (6) relativ zum anderen der Bauteile (3) bewegbar ist.

5. Verstellbare Lenksäule (1) nach zumindest einem der vorangehenden Ansprüche, **dadurch gekennzeichnet, dass** das Werkzeug (6) als Teil einer Lasche ausgebildet ist, wobei die Lasche vorzugsweise aus einer Gruppe bestehend aus einer Biegelasche (8) und einer Reißlasche und einer Reißbiegelasche (9) ausgewählt ist.

6. Verstellbare Lenksäule (1) nach zumindest einem der vorangehenden Ansprüche, **dadurch gekennzeichnet, dass** das Werkzeug (6), vorzugsweise die Lasche, Teil einer Energieabsorptionseinrichtung (10) der verstellbaren Lenksäule (1) ist und die Energieabsorptionseinrichtung (10) zumindest im Falle eines Fahrzeugcrashes zumindest die beiden Bauteile (2, 3) der Lenksäule (1) zur Absorption von Energie miteinander verbindet.

7. Verstellbare Lenksäule (1) nach zumindest einem der vorangehenden Ansprüche, **dadurch gekennzeichnet, dass** das Werkzeug (6) mit einer Umlenkung (11), vorzugsweise mit einem umgebogenen Bereich einer Lasche, in Wirkverbindung steht und das Werkzeug (6) zumindest beim Loslösen des Anschlagelementes (5) vom ersten der Bauteile (2) mittels der Umlenkung (11) am anderen der Bauteile (3) abgestützt, vor-zugsweise befestigt, ist.

8. Verstellbare Lenksäule (1) nach zumindest einem der vorangehenden Ansprüche, **dadurch gekennzeichnet, dass** das Anschlagelement (5) nach außen abstehend an einer Außenfläche (12) des ersten der Bauteile (2) angeordnet ist und das Werkzeug (6) zum Loslösen des Anschlagelementes (5) zwischen das Anschlagelement (5) und die Außenfläche (12) des ersten der Bauteile (2) einführbar ist.

9. Verstellbare Lenksäule (1) nach zumindest einem der vorangehenden Ansprüche, **dadurch gekennzeichnet, dass** das Anschlagelement (5) zumindest eine Anschlagfläche (13) aufweist, mit der es bei Erreichen eines Endes des Verstellweges am anderen der Bauteile (3) oder einem damit verbundenen weiteren Bauteil (29) anschlägt, wobei vorzugsweise vorgesehen ist, dass an der Anschlagfläche (13) ein, vorzugsweise elastischer, Puffer (14) zur Dämpfung des Anschlagens angeordnet ist und/oder das Werkzeug (6) zum Loslösen des Anschlagelements (5) vom ersten der Bauteile (2) in einem Bereich außerhalb der Anschlagfläche (13) zwischen das Anschlagelement (5) und das erste der Bauteile (2) einführbar ist.

10. Verstellbare Lenksäule (1) nach zumindest einem der vorangehenden Ansprüche, **dadurch gekennzeichnet, dass** zumindest eines der Bauteile (2, 3) eine zur fahrzeugfesten Fixierung am Kraftfahrzeug vorgesehene Konsoleneinheit und das zweite der Bauteile (2, 3) eine, von der Konsoleneinheit gehaltene Lenkspindehagereinheit zur drehbaren Lagerung einer Lenkspindel (15) ist, wobei die Lenkspindellagereinheit in der geöffneten Stellung der Feststelleinrichtung (4) gegenüber der Konsoleneinheit verstellbar ist und in der geschlossenen Stellung der Feststelleinrichtung (4) in ihrer Position relativ zur Konsoleneinheit festgehalten ist.

## Claims

1. An adjustable steering column (1) for a motor vehicle, wherein the steering column (1) has at least two components (2, 3) and at least one locking device (4), wherein in an opened position of the locking device (4) the components (2, 3) are adjustable in their position relative to one another along an adjustment path and in a closed position of the locking device (4) they are secured in their position relative to one another and at least on a first of the components (2) there is arranged a stop element (5), limiting the adjustment path and disconnectable from the first of the components (2) when a force value is exceeded, **characterized in that** the adjustable steering column (1) has an implement (6) insertable at least region-wise between the stop element (5) and the first of the components (2) for disconnection of the stop element (5).

2. An adjustable steering column (1) according to claim 1, **characterized in that** the implement (6) prises off and/or shears off the stop element (5) from the first of the components (2) upon insertion between the stop element (5) and the first of the components (2).

3. An adjustable steering column (1) according to at least one of the preceding claims, **characterized in that** at least upon disconnection of the stop element (5) from the first of the components (2), the implement (6) is supported on, preferably secured to, the other of the components (3).

4. An adjustable steering column (1) according to claim 3, **characterized in that** relative to the other of the components (3), the implement (6) is supported on the other of the components (3), preferably secured thereto, in a permanently immovable manner, or **in that** relative to the other of the components (3), the implement (6) is only immovably supported on the other of the components (3), preferably secured thereto, in an engagement position of an engagement element (7) and the engagement element (7) also has a disconnected position in which the implement (6) is movable relative to the other of the components (3).

5. An adjustable steering column (1) according to at least one of the preceding claims, **characterized in that** the implement (6) is in the form of part of a tab, wherein the tab is preferably selected from a group consisting of a bending tab (8) and a tearing tab and a tearing and bending tab (9).

6. An adjustable steering column (1) according to at least one of the preceding claims, **characterized in that** the implement (6), preferably the tab, is part of an energy absorption device (10) of the adjustable steering column (1) and, at least in the event of a vehicle crash, the energy absorption device (10) connects at least the two components (2, 3) of the steering column (1) to one another for the absorption of energy.

7. An adjustable steering column (1) according to at least one of the preceding claims, **characterized in that** the implement (6) is in an operative connection with a deflection (11), preferably with a bent-over region of a tab, and the implement (6) is supported on the other of the components (3,) preferably secured thereto, by means of the deflection (11), at least upon disconnection of the stop element (5) from the first of the components (2).

8. An adjustable steering column (1) according to at least one of the preceding claims, **characterized in that** the stop element (5) is arranged on an external surface (12) of the first of the components (2) in an outwards protruding manner and the implement (6) is insertable between the stop element (5) and the external surface (12) of the first of the components (2) for disconnection of the stop element (5).

9. An adjustable steering column (1) according to at least one of the preceding claims, **characterized in that** the stop element (5) has at least one stop face (13) with which upon reaching an end of the adjustment path it strikes against the other of the components (3) or another component (29) connected thereto, wherein it is preferably provided that a, preferably resilient, buffer (14) to cushion the striking is arranged at the stop face (13) and/or for disconnection of the stop element (5) from the first of the components (2), the implement (6) is insertable between the stop element (5) and the first of the components (2) in a region outside of the stop face (13).

10. An adjustable steering column (1) according to at least one of the preceding claims, **characterized in that** at least one of the components (2, 3) has a bracket unit intended for vehicle-fixed fixing to the motor vehicle and the second of the components (2, 3) is a steering shaft bearing unit, held by the bracket unit, for rotatable mounting of a steering shaft (15), wherein the steering shaft bearing unit is adjustable with respect to the bracket unit in the opened position of the locking device (4) and is secured in its position relative to the bracket unit in the closed position of the locking device (4).

## Revendications

1. Colonne de direction réglable (1) pour un véhicule automobile, la colonne de direction (1) présentant au moins deux composants (2, 3) et au moins un dispositif d'immobilisation (4), la position des composants (2, 3) étant réglable l'un par rapport à l'autre le long d'un trajet de réglage lorsque le dispositif d'immobilisation est ouvert, et leur position l'un par rapport à l'autre étant maintenue lorsque le dispositif d'immobilisation (4) est fermé, et au moins une élément de butée (5) limitant le trajet de réglage et détachable du premier des composants (2) en cas de dépassement d'une valeur de force est disposé sur le premier des composants (2), **caractérisé en ce que** la colonne de direction (1) réglable présente un outil (6) pouvant être introduit, du moins par endroits, entre l'élément de butée (5) et le premier des composants (2) pour détacher l'élément de butée (5).

2. Colonne de direction réglable (1) selon la revendication 1, **caractérisée en ce que** l'outil (6) se soulève et/ou se détache du premier des composants (2) lors de l'introduction entre l'élément de butée (5) et le premier des composants (2).

3. Colonne de direction réglable (1) selon l'une quelconque des revendications précédentes, **caractérisée en ce que** l'outil (6) est soutenu, de préférence fixé sur l'autre des composants (3), du moins lorsque l'élément de butée (5) se détache du premier des composants (2).

4. Colonne de direction réglable (1) selon la revendication 3, **caractérisée en ce que** l'outil (6) s'appuie, de préférence est fixé, sur l'autre des composants (3) de manière définitivement immobile par rapport à l'autre des composants (3), ou **en ce que** l'outil (6) s'appuie, de préférence est fixé, sur l'autre des composants (3) de manière immobile par rapport à l'autre des composants (3) uniquement sur un point d'engagement d'un élément d'engagement (7), et **en ce que** l'élément d'engagement (7) est aussi dans une position détachée dans laquelle l'outil (6) est mobile par rapport à l'autre des composants (3).

5. Colonne de direction réglable (1) selon au moins l'une quelconque des revendications précédentes, **caractérisée en ce que** l'outil (6) est conçu en tant que partie d'une éclisse, l'éclisse étant choisie de préférence dans le groupe constitué d'une languette flexible (8), d'une languette à déchirer et d'une languette flexible à déchirer (9).

6. Colonne de direction réglable (1) selon au moins l'une quelconque des revendications précédentes, **caractérisée en ce que** l'outil (6), de préférence l'éclisse, fait partie d'un dispositif d'absorption d'énergie (10) de la colonne de direction réglable (1) et **en ce que** le dispositif d'absorption d'énergie (10) relie ensemble au moins les deux composants (2, 3) de la colonne de direction (1) pour absorber l'énergie au moins dans le cas d'un crash du véhicule.

7. Colonne de direction réglable (1) selon au moins l'une quelconque des revendications précédentes, **caractérisée en ce que** l'outil (6) est relié activement à une déviation (11), de préférence à une zone cintrée d'une éclisse, et **en ce que** l'outil (6) est soutenu, de préférence fixé sur l'autre des composants (3) au moins lorsque l'élément de butée (5) se détache du premier des composants (2).

8. Colonne de direction réglable (1) selon au moins l'une quelconque des revendications précédentes, **caractérisée en ce que** l'élément de butée (5) est disposé en saillie vers l'extérieur sur une face extérieure (12) du premier des composants (2) et **en ce que** l'outil (6) pour détacher l'élément de butée (5) peut être introduit entre l'élément de butée (5) et la face extérieure (12) du premier des composants (2).

9. Colonne de direction réglable (1) selon au moins l'une quelconque des revendications précédentes, **caractérisée en ce que** l'élément de butée (5) présente au moins une face de butée (13) avec laquelle il vient buter contre l'autre des composants (3) ou un autre composant (29) relié à celui-ci lorsque l'extrémité du trajet de réglage est atteinte, alors que, de préférence, il est prévu de disposer, sur la face de butée (13) un tampon (14), de préférence élastique, afin d'amortir la butée et/ou de pouvoir introduire l'outil (6) pour détacher l'élément de butée (5) du premier des composants (2) dans une zone à l'extérieur de la face de butée (13), entre l'élément de butée (5) et le premier des composants (2).

10. Colonne de direction réglable (1) selon au moins l'une quelconque des revendications précédentes, **caractérisée en ce qu'**au moins un des composants (2, 3) est une unité de console prévue pour être fixée définitivement sur le véhicule, et le deuxième des composants (2, 3) est une unité palier d'arbre de direction, maintenue par l'unité de console, destinée au logement rotatif d'un arbre de direction (15), l'unité palier d'arbre de direction pouvant se déplacer par rapport à l'unité de console lorsque le dispositif d'immobilisation est ouvert, et maintenue dans sa position par rapport à l'unité de console lorsque le dispositif d'immobilisation (4) est fermé.
